Europäisches Patentamt

European Patent Office

Office européen des brevets

(11) Veröffentlichungsnummer: **0 144 984**
**B1**

# (12) EUROPÄISCHE PATENTSCHRIFT

(45) Veröffentlichungstag der Patentschrift:
**12.04.89**

(21) Anmeldenummer: **84114874.5**

(22) Anmeldetag: **06.12.84**

(51) Int. Cl.⁴: **B 62 M 9/12**, B 62 J 13/00

(54) **Fahrrad-Kettenschaltung.**

(30) Priorität: **12.12.83 CH 6624/83**

(43) Veröffentlichungstag der Anmeldung:
**19.06.85 Patentblatt 85/25**

(45) Bekanntmachung des Hinweises auf die Patenterteilung:
**12.04.89 Patentblatt 89/15**

(84) Benannte Vertragsstaaten:
**AT BE DE FR GB IT NL SE**

(56) Entgegenhaltungen:
**FR-A- 565 010**
**FR-A- 751 720**
**FR-A- 1 519 785**
**FR-A- 2 422 516**
**US-A- 4 198 876**

(73) Patentinhaber: **Krampera, Jiri, Bertastrasse 34,
CH-8003 Zürich (CH)**

(72) Erfinder: **Krampera, Jiri, Bertastrasse 34,
CH-8003 Zürich (CH)**

(74) Vertreter: **Quehl, Horst Max, Dipl.-Ing., Patentanwalt
Seestrasse 640 Postfach 90, CH-8706 Meilen/Zürich
(CH)**

**Beschreibung**

Die Erfindung betrifft eine Fahrrad-Kettenschaltung mit einem am Hinterrad vorgesehenen Satz von Zahnkränzen und einem Schaltmechanismus für die Schaltbewegung der Kette, wobei an der dem Hinterrad zugekehrten Seite des größten Zahnkranzes Kettenfangteile zur radialen Abstützung der vom größten Zahnkranz abgesprungenen Kette vorgesehen sind, die aus dem Zahnkranz teilweise ausgestanzt und ausgebogen sind und die einen kleineren Abstand zur Achse des Zahnkranzes haben als der Außenumfang dieses größten Zahnkranzes.

Eine Fahrradkettenschaltung dieser Art ist bekannt aufgrund der Darstellungen in Fig. 7 und 8 der US-A-4 198 876. Ihre Kettenfangteile sind vom radial äußeren Rand einer ausgestanzten Öffnung des größten Zahnkranzes im rechten Winkel nach außen gebogen, so daß ihre Fangfläche, auf der sich die Kette abstützen kann, tangential zu einer Umfangslinie entsprechend der Größe der angenähert quadratischen Ausstanzung verläuft und sie in Umfangsrichtung durch scharfe Kanten begrenzt sind. Diese scharfen Kanten sowie die in Umfangsrichtung kurze Erstreckung dieser ausgestanzten Kettenfangteile bewirken einen hakenartigen festen Eingriff mit der Kette, wenn diese nach einer Fehlschaltung auf sie fällt sowie eine starke Belastung durch die auf die Kette wirkende Antriebskraft, so daß sich die Kettenfangteile zur Achse hin verbiegen können und die Kette folglich zu den Radspeichen hin von den Kettenfangteilen abrutscht und in den sich radial nach innen anschließenden, sich verjüngenden Spaltraum hineingelangen kann. Die derartig ausgeführten Kettenfangteile verhindern dann auch, die Kette aus dieser eingeklemmten Position wieder befreien zu können.

Der Erfindung liegt die Aufgabe zugrunde, eine Fahrrad-Kettenschaltung der genannten Art zu finden, die diese Nachteile vermeidet, indem sie in radialer Richtung hochbelastbare Kettenfangteile aufweisen soll, die der Kette zusätzlich auch einen sicheren seitlichen Halt geben. Außerdem sollen ihre Kettenfangteile aufgrund einer verhältnismäßig geringen Verformung des Materials des Zahnkranzes einfach herstellbar sein. Die Lösung dieser Aufgabe erfolgt aufgrund der kennzeichnenden Merkmale des Patentanspruchs 1. Vorteilhafte Ausgestaltungen der Erfindung sind Gegenstand der abhängigen Patentansprüche.

Im folgenden wird die Erfindung anhand der in den Zeichnungen dargestellten Ausführungsbeispiele näher erläutert. Es zeigt:

Fig. 1 eine unvollständige, schematische Querschnittsdarstellung durch das Hinterrad im Bereich des Mehrfachzahnkranzes in Ausführungsform gemäß dem Stand der Technik,

Fig. 2 eine Querschnittsdarstellung entsprechend einem Teil der Fig. 1 einer weiteren Ausführungsform gemäß dem Stand der Technik,

Fig. 3 eine Darstellung eines ersten Ausführungsbeispieles gemäß der Erfindung entsprechend einem axialen Teilquerschnitt durch den größten Zahnkranz mit einer Radspeiche des zugehörigen Rades.

Fig. 4 einen axialen Teilquerschnitt durch den größten Zahnkranzes einer zweiten Ausführungsform der Erfindung,

Fig. 5 eine Seitenansicht auf einen Teil des Zahnkranzes nach Fig. 4 mit auf den Kettenfangteilen aufliegender Kette und

Fig. 6 eine Darstellung entsprechend Fig. 5 als weitere Ausführungsform zu einer Querschnittsdarstellung nach Fig. 4.

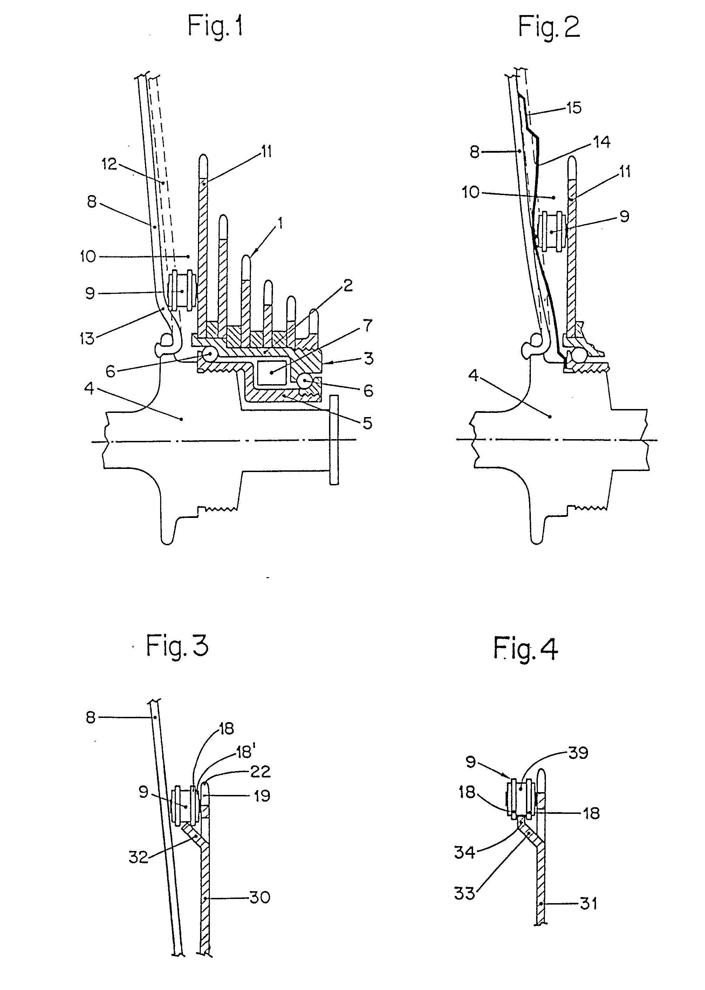

Wie allgemein bekannt, hat die Fahrradkettenschaltung einen Satz 1 von Zahnkränzen, die auf einen Teil 2 eines Leerlaufkörpers 3 fest montiert sind, der seinerseits auf einem fest mit der Radnabe 4 verbundenen Teil 5 des Leerlaufkörpers 3 mittels Kugeln 6 gelagert ist. Die Antriebsverbindung erfolgt durch Klinkenkörper 7, die es ermöglichen, daß das Rad mit den Speichen 8 bei stillstehendem Zahnkranzsatz 1 im Leerlauf rollen kann. Die Darstellung der Fig. 1 veranschaulicht den durch Kettenfangteile 32, 33 zu vermeidenden Zustand, bei welchem die Kette 9 sich in dem in radialer Richtung nach innen sich verengenden Raum 10 zwischen den Radspeichen 8 und dem größten Zahnkranz 11 verklemmt hat. Aufgrund der Klemmkräfte sind die Speichen 8 gegenüber der durch Strichlinien 12 angedeuteten Form durch eine Ausbiegung 13 deformiert. Diese Verklemmung bewirkt auch, daß sich das Hinterrad mit den Speichen 8 nicht mehr frei relativ zu dem Zahnkranzsatz 1 drehen kann. Außerdem besteht dabei die Gefahr einer vollständigen Blockierung des Hinterrades, die zum Sturz des Fahrers führen kann.

Auch eine Speichenschutzscheibe 14 entsprechend der Darstellung des Standes der Technik in Fig. 2, die mit ihrem Rand 15 an den Radspeichen anliegt, verhindert in der Regel nicht, daß sich die Kette 9 in der dargestellten Weise verklemmen kann, so daß sie nach Unterbrechung der Fahrt von Hand oder mittels eines Werkzeuges befreit werden muß, um sie wieder auf einem Zahnkranz in Eingriff zu bringen. Diese Verklemmung kann mit einer bleibenden Deformation der Speichenschutzscheibe verbunden sein.

Die Fig. 3 entsprechend einem ersten Ausführungsbeispiel der Erfindung zeigt, wie die Kette 9 durch eines von mehreren Kettenfangteilen 32 gehalten wird, nachdem sie von den Zähnen 19 des Zahnkranzes 30 heruntergefallen ist. Dabei hintergreift das Kettenfangteil 32 die dem Zahnkranz 30 zugekehrten Kettenlaschen 18, 18', so daß die Kette 9 nicht in die Speichen 8 hinein weggleiten kann. Es versteht sich, daß der Abstand zwischen dem Kettenfangteil 32 oder 33 und dem Außenumfang 22 des Zahnkranzes für größere Zahnkränze größer gewählt werden kann als für kleinere Zahnkränze, je nach Breite des Raumes 10 im Bereich der Kettenfangteile, jedoch kann diese Breite auch durch einen kleinen Distanzring vergrößert werden, der zwischen der Nabe 4 und dem Teil 5 des Leerlaufkörpers 3 eingesetzt wird.

EP 0 144 984 B1

Die Kettenfangteile 33 des Ausführungsbeispieles nach Fig. 4 haben zusätzlich zu der im spitzen Winkel radial nach außen verlaufenden Ausbiegung einen parallel zur Ebene des Zahnkranzes 31, 31′ abgebogenen Endteil 34, 34′, der zwischen die beidseitig der Kette 9 vorhandenen Kettenlaschen 18 eingreift, so daß die Kette 9 sicher gehalten wird. Auch diese Kettenfangteile 33, 33′, lassen sich durch eine relativ geringe Verformung bei ihrer Herstellung durch Ausstanzen und Ausbiegen aus dem Zahnkranz 31, 31′ herstellen. Dabei können ohne Vergrößerung des Arbeitsaufwandes die Endteile 34, 34′ der Kettenfangteile 33, 33′ in Umfangsrichtung des Zahnkranzes 31, 31′ abgerundet sein. Da die Abstützung der Kette 9 auf den Kettenrollen 39 erfolgt, kann sich die Kette 9 auf den abgerundeten Fangflächen 36, 36′ rollend weiterbewegen, ohne dabei nennenswerte radiale Krafteinwirkungen auf die Kettenfangteile 32, 33, 33′ auszuüben, falls der Fahrer irrtümlich auch bei abgesprungener und auf den Kettenfangteilen gehaltener Kette 9 diese mit unverminderter Kraft weiter antreibt.

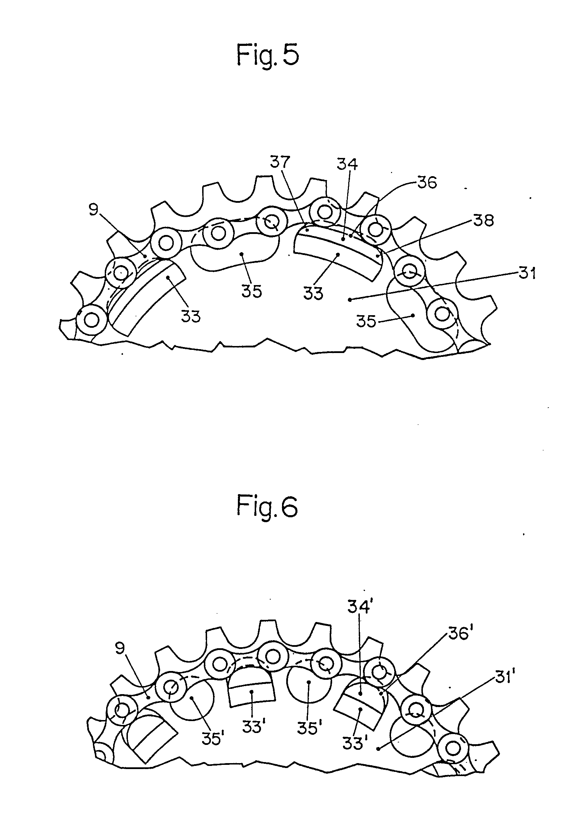

Wie Fig. 5 zeigt, können die Kettenfangteile 33 in Umfangsrichtung auch länglich geformt sein, so daß die Kette 9 noch besser über sie hinwegrollen kann. Die genannte Abrundung ist in diesem Fall durch je eine Abrundung an den beiden Enden, 37, 38 jedes Kettenfangteiles 33 verwirklicht.

Die Darstellungen der Fig. 5 und 6 zeigen zwischen jeweils zwei benachbarten Kettenfangteilen 33, 33′ ein Loch 35, 35′, das bei länglichen Kettenfangteilen 33 ebenfalls länglich ausgebildet ist, während es gemäß Fig. 6 kreisrund ist.

**Patentansprüche**

1. Fahrrad-Kettenschaltung mit einem am Hinterrad vorgesehenen Satz von Zahnkränzen und einem Schaltmechanismus für die Schaltbewegung der Kette, wobei an der dem Hinterrad (8) zugekehrten Seite des größten Zahnkranzes (30, 31, 31′) Kettenfangteile (32, 33, 33′) zur radialen Abstützung der vom größten Zahnkranz (30, 31, 31′) abgesprungenen Kette (9) vorgesehen sind, die aus dem Zahnkranz (30, 31, 31′) teilweise ausgestanzt und ausgebogen sind und die einen kleineren Abstand zur Achse des Zahnkranzes (30, 31, 31′) haben als der Außenumfang dieses größten Zahnkranzes, dadurch gekennzeichnet, daß das freie Querschnittsende (34, 34′) jedes Kettenfangteiles (32, 33, 33′) von der Radachse weg nach außen gerichtet ist, so daß es zwischen die Laschen (18) einer gefangenen Kette (9) eingreift, wobei die Kettenfangteile (32, 33, 33′) jeweils mit dem radial inneren Rand der ausgestanzten Öffnung verbunden sind und ihre Fangfläche (36, 36′), gemessen in Umfangsrichtung des Zahnkranzes (30, 31, 31′), länger ist als die Länge des Zwischenraumes zwischen den Kettenrollen (39) der Kette (9).

2. Fahrrad-Kettenschaltung nach Anspruch 1, dadurch gekennzeichnet, daß das freie Querschnittsende (34, 34′) der Kettenfangteile (33, 33′) parallel zur Ebene des größten Zahnkranzes (31, 31′) verläuft und von diesem einen Abstand hat, derart, daß es die Kette (9) zwischen den Kettenlaschen (18) an den Kettenrollen (39) abstützt und mittels der Kettenlaschen (18) seitlich führt.

3. Fahrrad-Kettenschaltung nach Anspruch 1 oder 2, dadurch gekennzeichnet, daß die Fangfläche (36, 36′) der Kettenfangteile (32, 33, 33′) in Umfangsrichtung des Zahnkranzes (30, 31, 31′) abgerundet ist.

4. Fahrrad-Kettenschaltung nach einem der Ansprüche 1 bis 3, dadurch gekennzeichnet, daß zwischen den Kettenfangteilen (32, 33, 33′) im Zahnkranz (30, 31, 31′) jeweils ein Loch (35, 35′) vorgesehen ist.

5. Fahrrad-Kettenschaltung nach einem der Ansprüche 1 bis 4, dadurch gekennzeichnet, daß die Kettenfangteile (33) in Umfangsrichtung länglich ausgebildet sind.

**Claims**

1. Chain-shifting gear-change for a bicycle with a set of sprockets provided on the rear wheel and a gear-change mechanism for shifting the chain, in which on the side of the largest sprocket (30, 31, 31′) facing the rear wheel (8) are provided chain catching means (32, 33, 33′) for radially supporting the chain (9) which has jumped off the largest sprocket (30, 31, 31′) and which are partly punched and bent out of the sprocket (30, 31, 31′) and which have a smaller facing from the axis of sprocket (30, 31, 31′) than the outer circumference of said largest sprocket, characterized in that the free cross-sectional ends (34, 34′) of each chain catching means (32, 33, 33′) is directed outwards away from the wheel axis, so that it engages between the side bars (18) of a caught chain (9), the chain catching means (32, 33, 33′) being in each case connected to the radially inner edge of the punched-out opening and their catching face (36, 36′), measured in the circumferential direction of the sprocket (30, 31, 31′), is longer than the length of the gap between the chain rollers (39) of chain (9).

2. Chain-shifting gear-change for a bicycle according to claim 1, characterized in that the free cross-sectional end (34, 34′) of the chain catching means (33, 33′) is parallel to the plane of the largest sprocket (31, 31′) and has a spacing therefrom, so that it supports the chain (9) between the chain side bars (18) on the chain rollers (39) and is laterally guided by means of the chain side bars (18).

3. Chain-shifting gear-change for a bicycle according to claims 1 or 2, characterized in that the catching face (36, 36′) of the chain catching means (32, 33, 33′) is rounded in the circumferential direction of sprocket (30, 31, 31′).

4. Chain-shifting gear-change for a bicycle according to one of the claims 1 to 3, characterized in that a hole (35, 35′) is in each case provided between the chain catching means (32, 33, 33′) in sprocket (30, 31, 31′).

5. Chain-shifting gear-change for a bicycle according to one of the claims 1 to 4, characterized in that the chain catching means (33) are elongated in the circumferential direction.

3

## Revendications

1. Changement de vitesse à dérailleur de chaîne pour bicyclette, comportant un jeu de couronnes dentées, prévu sur la roue arrière, et un mécanisme de changement de vitesse pour faire dérailler la chaîne, des pièces (32, 33, 33') de saisie de la chaîne étant prévues, sur la face, tournée vers la roue arrière (8), de la plus grande couronne dentée (30, 31, 31'), comme support radial pour le cas où la chaîne (9) a sauté de la plus grand couronne dentée (30, 31, 31'), pièces qui sont, en partie, obtenues par matriçage et pliage à partir de la couronne dentée (30, 31, 31') et dont la distance à l'axe de la couronne dentée (30, 31, 31') est plus petite que celle du périmètre extérieur de cette plus grande couronne dentée, caractérisé en ce que le profil d'extrémité libre (34, 34') de chaque pièce (32, 33, 33') de saisie de la chaîne est redressé vers l'extérieur, en s'éloignant de l'axe de la roue, de façon à saisir les éclisses (18) d'une chaîne (9) prisonnière, les pièces de saisie (32, 33, 33') de la chaîne étant chaque fois reliées au bord, intérieur radialement, de l'ouverture matricée et leur surface de saisie (36, 36'), en mesurant suivant la circonférence de la couronne dentée (30, 31, 31'), étant plus longue que la longueur de l'espace intermédiaire entre les rouleaux (39) de la chaîne (9).

2. Changement de vitesse de bicyclette suivant la revendication 1, caractérisé en ce que le profil d'extrémité libre (34, 34') des pièces (33, 33') de saisie de la chaîne est parallèle au plan de la plus grande couronne dentée (31, 31') et est à une distance de celle-ci telle qu'il supporte la chaîne (9), par les rouleaux (39) de chaîne, entre les éclisses (18) de chaîne et qu'il la guide latéralement au moyen de des éclisses (18) de chaîne.

3. Changement de vitesse de bicyclette suivant la revendication1 ou 2, caractérisé en ce que la surface de saisie (36, 36') des pièces de saisie de la chaîne (32, 33, 33') est arrondie dans la direction de la périphérie de la couronne dentée (30, 31, 31').

4. Changement de vitesse de bicyclette suivant l'une quelconque des revendications 1 à 3, caractérisé en ce qu'entre chacune des pièces de saisie de la chaîne (32, 33, 33'), on a prévu un trou (35, 35') dans la couronne dentée (30, 31, 31').

5. Changement de vitesse de bicyclette suivant l'une quelconque des revendications 1 à 4, caractérisé en ce que les pièces de saisie de la chaîne (33) sont de forme allongée, dans la direction périphérique.

# Fig. 1

# Fig. 2

# Fig. 3

# Fig. 4

5

## Fig. 5

## Fig. 6